# EUROPEAN PATENT APPLICATION

(11) **EP 2 538 539 A1**
(43) Date of publication of application: **26.12.2012**
(21) Application number: 11170514.1
(22) Date of filing: 20.06.2011
(51) Int. Cl.: H02M 5/45

(54) **Rectifier stage for a subsea power grid**

(71) Applicant: SIEMENS AKTIENGESELLSCHAFT, 80333 München (DE)
(72) Inventor: Haugan, Espen, 7052 Trondheim (NO)

(57) **Abstract**

It is described a rectifier stage (451) for converting an input AC voltage to an output voltage, the rectifier stage comprising: a first AC input terminal (455); a second AC input terminal (457), wherein the input AC voltage is applicable between the first input terminal and the second input terminal; a first DC output terminal (467); a second DC output terminal (468); a first thyristor (461) connected between the first DC output terminal (467) and the first AC input terminal (455); a second thyristor (463) connected between the first DC output terminal (467) and the second AC input terminal (457); a gate control circuit (472) adapted and connected to control a first conductance state of the first thyristor (461) and to control a second conductance state of the second thyristor (463) such that the first thyristor and the second thyristor provide a rectified AC voltage between the first DC output terminal (467) and the second DC output terminal (468) as the output voltage.

## Description

### Field of invention

The present invention relates to a rectifier stage, to an AC-AC converter, to a converter arrangement, to a power supply arrangement, to a subsea power grid and to a method for converting an input AC voltage to an output voltage. In particular, the rectifier stage, the AC-AC converter, the converter arrangement, and the method for converting an input AC voltage to an output voltage may be applied in a variable speed drive, in particular located below a sea level, such as in a depth between 1000 m and 4000 m. The variable speed drive may in turn be connected to or comprise a pump or a compressor for supplying electric energy with varying frequency thereto.

### Background

An oil or a gas exploration side below the sea level may require operation of a motor, a pump or a compressor in order to enable the exploration or conveying operation. In particular, in an oil reservoir or in a gas reservoir it may be required to keep a particular pressure, in order to enable to convey the oil or the gas from the oil reservoir or gas reservoir. In particular, the pump, compressor or motor may be required to be operated under varying power consumption, in order to appropriately adjust e.g. the pressure in the oil reservoir or gas reservoir. Therefore, an electrical power supply is required. In particular, it may be required to deliver electrical energy from a topside equipment above the sea level to the subsea location located e.g. 1000 m to 4000 m below the sea level.

It has however been observed that it may be difficult to supply electric energy in particular to a variable speed drive which is located in a great depth below the sea level.

There may be a need for a rectifier stage, a AC-AC converter, a converter arrangement, a power supply arrangement, a subsea power grid and a method for converting an input AC voltage to an output voltage, wherein in particular a load having varying power consumption may be appropriately supplied with electric energy, and wherein in particular the required equipment may be compact, cost-effective and producible in a simple manner.

The need may be satisfied by the subject-matter of the independent claims. Exemplary embodiments are specified in the dependent claims.

### Summary

According to an embodiment of the present invention, it is provided a rectifier stage for converting an input AC voltage to an output voltage, the rectifier stage comprising: a first AC input terminal; a second AC input terminal, wherein the input AC voltage is applicable between the first input terminal and the second input terminal; a first DC output terminal; a second DC output terminal; a first thyristor connected between the first DC output terminal the first AC input terminal; a second thyristor connected between the first DC output terminal the second AC input terminal; a gate control circuit adapted and connected to control a first conductance state of the first thyristor and to control a second conductance state of the second thyristor such that the first thyristor and the second thyristor provide a rectified AC voltage between the first DC output terminal and the second DC output terminal as the output voltage, wherein the amplitude of the rectified AC voltage does not increase upon increasing the amplitude of the input AC-voltage, wherein in particular the amplitude of the rectified AC voltage may be substantially constant upon varying an amplitude of the input AC-voltage.

The rectifier stage may convert an alternating current (AC) which may periodically reverses direction to a direct current (DC) which may be only in one direction. In particular, the input AC voltage between the first AC input terminal and the second AC input terminal is converted to the output voltage using the rectifier stage, wherein the output voltage may be a rectified AC voltage resulting from rectifying the input AC voltage. The rectified AC voltage may be a voltage in only one direction which however may fluctuate or oscillate (according to the frequency (being one divided by the period) of the input AC voltage) to a particular degree, thus not being constant, wherein its amplitude may be the peak of the voltage taken over one period of the input AC voltage. In particular, the rectified AC voltage is provided between the first DC output terminal and the second DC output terminal.

For producing the rectified AC voltage the first thyristor is connected between the first DC output terminal and the second DC output terminal (in particular an anode of the first thyristor is, in particular at least indirectly having one or more components in between, connected to the second DC output terminal and a cathode of the first thyristor is connected, in particular directly without any further element connected in between, to the first DC output terminal) and further the first thyristor (in particular the anode of the first thyristor) is connected to the first AC input terminal. Thus, the first thyristor connected between the first DC output terminal and the first AC input terminal conducts a current from the first AC input terminal to the first DC output terminal, when in the conducting state.

Further, an anode of the second thyristor may be connected to the second DC output terminal and a cathode of the second thyristor may be connected to the first DC output terminal. Further, the anode of the second thyristor may be connected to the second AC input terminal. In other embodiments the anode and the cathode of the first thyristor may switch places and also the anode and the cathode of the second thyristor may switch places.

The gate control circuit may have at least a first output terminal and a second output terminal, wherein the first output terminal of the gate control circuit may be connected to a gate of the first thyristor and wherein the second output terminal of the gate control circuit may be connected to a gate of the second thyristor. The gate control circuit may be adapted to supply a first control signal to the first output terminal of the gate control circuit and supply a second control signal to the second output terminal of the gate control circuit. The first control signal may control the first conductance state of the first thyristor, such that if the first control signal is above a first threshold, the first thyristor may be in a conducting state for connecting (or conducting a current from ) the first AC input terminal to the first DC output terminal. Further, the second control signal generated by the gate control circuit may control the second conductance state of the second thyristor, such that the second thyristor may be in a conducting state (conducting a current between) connecting the second AC input terminal and the first DC output terminal, if the second control signal is above a second threshold. In particular, the first control signal and/or the second control signal may oscillate in accordance or in synchronization with a frequency of the input AC voltage applied between the first AC input terminal and the second AC input terminal.

In particular the gate control circuit may have input terminals for receiving the input AC voltage. The gate control circuit may comprise one or more semiconductor integrated circuits and may be supplied with electric energy using the input AC voltage.

In particular, the rectifier stage may not have any electrical connection to an electrical ground. In particular, the rectifier stage may be free floating, thus the rectifier stage may be kept at an arbitrary potential relative to an electrical ground. The rectifier stage may be a half wave rectifier stage or in particular a full wave rectifier stage.

In particular, the input AC voltage may be a three-phase AC input voltage, wherein a first AC input terminal, a second AC input terminal and a third AC input terminal are provided for supplying the three-phase AC input voltage. In particular, the rectified AC voltage may be a three-phase half wave rectified voltage or a three-phase full wave rectified voltage.

The first thyristor and/or the second thyristor may be a solid-state semiconductor device with four layers of alternating N and P-type material. They may be bistable switches conducting when their gate receives a current pulse, such as the first control signal and/or the second control signal, from the gate control circuit. The first thyristor and the second thyristor may continue to conduct (being in their conducting state), while they are forward biased (that is while the voltage across the thyristor is not reversed).

Using a first thyristor and a second thyristor (and in particular also a third thyristor, when the input AC voltage is a three-phase input voltage) may have the advantage over using diodes that the conductance states of the individual thyristors may be controlled in order to adjust the amplitude of the rectified AC voltage to be at least approximately constant, even if the amplitude of the input AC voltage varies, in particular in a range between 10 % and 30 %. Thereby, a capacitor having a high rated voltage may be avoided.

A rectified constant DC voltage can be obtained by constant controlling the thyristor firing angle as is known form SCR theory. By having a sufficient high AC voltage the DC voltage can be controlled to the nominal voltage within the specified voltage variation area. In particular, if the amplitude of the AC voltage (being in particular the maximum voltage taken over one period of oscillation) is larger (in particular by 10% and 40%) than a nominal amplitude, the thyristor(s) can be controlled such that the amplitude of the rectified AC voltage (or the DC voltage) does increase by between 0% and 10%, in particular stays constant.

An IGBT may not be appropriate for that purpose as an IGBH may have a low capability for current^2 x time integral compared with a thyristor. This makes it hard to switch off the IGBT before it will be broken. Therefore using a thyristor in the rectifier stage may have advantages.

In particular, the rectified AC voltage may be a voltage in one direction (in particular being above or below a particular threshold during a whole period of oscillation of the input AC voltage). The rectified AC voltage may be characterized by an amplitude relative to a threshold voltage, wherein the rectified AC voltage oscillates during a period of the input AC voltage. The amplitude of the rectified AC voltage may be defined as the maximum of the rectified AC voltage taken over one period of the input AC voltage. Similarly, the amplitude of the input AC voltage may be defined as the maximum of the input AC voltage over one period of the input AC voltage.

A variation of the amplitude of the input AC voltage may for example be caused by varying loads connected to the rectifier stage or varying cable length supplying electric energy to the rectifier stage. Increasing or decreasing the amplitude of the input AC voltage in a range between 10 % and 30 % will lead to an amplitude of the rectified AC voltage varying not more than 10% around a nominal value. Thereby, a load connected to the rectifier stage, in particular via an AC-converter stage, may be operated in a safe manner and further expensive voluminous capacitors in the rectifier stage may be avoided.

In particular, the rectifier stage may be used for applications with power requirements ranging for 4 MVA to 8 MVA, in particular in a depth of between 1000 m and 3000 m below the sea level. Via the rectifier stage, a variable speed drive may be supplied with electric energy. In particular, the rectifier stage can be part of a variable speed drive, in particular of a variable frequency drive.

In particular, the input AC voltage may be supplied using a cable connected to a topside equipment delivering the electrical energy. In particular, the cable may be 150 km - 300 km long. In particular, large voltage variations in the input AC voltage may occur when using such a long cable. The voltage variation of the input AC voltage may take place both transiently (some few periods of the input AC voltage) and over long terms (variations over minutes). In a conventional system the subsea equipment connected to the conventional rectifier stage may have experienced these voltage variations and may not have been operated appropriately. The rectifier stage comprising the thyristors may reduce the problems caused by voltage variations of the input AC voltage.

According to an embodiment of the present invention, the gate control circuit is adapted to control the first conductance state and the second conductance state in order to adjust the amplitude of the rectified AC voltage to deviate less than 10 %, in particular less than 5 %, further in particular less than 2 %, from a target amplitude of the rectified AC voltage, when the amplitude of the input AC voltage deviates from a nominal amplitude of the input AC voltage in a range between 10 % and 30 %, in particular between 20 % and 30 %.

Thus, in particular, the variation of the amplitude of the rectified AC voltage is less than the variation of the amplitude of the input AC voltage. Thereby, a pump, a compressor or a motor being supplied with electric energy using the rectifier stage (in particular also further using an AC-converter stage) may be smoothly operated, in particular operated using varying power supply.

According to an embodiment of the present invention, the rectifier stage further comprises a capacitor (an electrical element being adapted for storing an electrical charge) connected between the first DC output terminal and the second DC output terminal for smoothing the rectified AC voltage to generate an output DC voltage as the output voltage. Thus, the output DC voltage is obtained between the first DC output terminal and the second DC output terminal. In particular, the output DC voltage may vary to a smaller degree over one period of the input AC voltage than the rectified AC voltage. Thereby, the capacitor may be dimensioned such that it is able to smoothen the rectified AC voltage having an amplitude in a range deviating less than 10 % from a target amplitude of the rectified AC voltage. Thereby, the size of the rectifier stage may be reduced compared to a conventional rectifier stage by in particular reducing the size of the capacitor.

According to an embodiment of the present invention, the gate control circuit is adapted to control the first conductance state and the second conductance state in order to adjust the output DC voltage to deviate less than 10 %, in particular less than 5 %, further in particular less than 2 %, from a target output DC voltage, when the amplitude of the input AC voltage deviates from a nominal amplitude of the input AC voltage in a range between 10 % and 40 %, in particular between 20 % and 40 %. Thereby, in particular, the variation (of the average) of the output DC voltage is less than the deviation of the amplitude of the input AC voltage from the nominal amplitude of the input AC voltage. Thus, the rectifier stage may be used in a converter that is part of a variable speed drive, which may supply an electric motor with electric energy of variable frequency.

According to an embodiment of the present invention, the capacitor has a rated voltage not greater than required to smoothen the rectified AC voltage deviating less than 10 %, in particular less than 5 %, further in particular less than 2 %, from the target amplitude of the rectified AC voltage.

In particular, for an input AC voltage having an amplitude corresponding to the nominal amplitude of the input AC voltage a nominal rated voltage of the capacitor may be required to smoothen the rectified AC voltage. However, when the amplitude of the input AC voltage is larger than the nominal amplitude of the input AC voltage an amplitude of the rectified AC voltage generated in a conventional system (using e.g. diodes instead of thyristors) is also larger than a nominal amplitude of the rectified AC voltage and thus a rated voltage larger than the nominal rated voltage is required for the capacitor, in order to smoothen the rectified AC voltage.

Since, in the embodiment of the invention, the gate control circuit controls the first conductance state and the second conductance state of the first thyristor and the second thyristor, respectively, the amplitude of the rectified AC voltage deviates less than 10 %, in particular less than 5 %, further in particular less than 2 %, from the target amplitude of the rectified AC voltage. Thus, the capacitor may be dimensioned such that it has a rated voltage to be at most 10 %, in particular at most 5 %, further in particular at most 2 %, greater than the nominal rated voltage of the capacitor. Thereby, the size and costs of the capacitor may be reduced.

According to an embodiment of the present invention, the rectifier stage further comprises another first thyristor connected between the first DC output terminal and the second DC output terminal in series with the first thyristor and connected to the first AC input terminal, the first AC input terminal being connected between the first thyristor and the other first thyristor; and another second thyristor connected between the first DC output terminal and the second DC output terminal in series with the second thyristor and connected to the second AC input terminal, the second AC input terminal being connected between the second thyristor and the other second thyristor, wherein the gate control circuit is further adapted and connected to control another first conductance state of the other first thyristor and to control another second conductance state of the other second thyristor such that the first thyristor, the second thyristor, the other first thyristor and the other the second thyristor together provide the rectified AC voltage between the first DC output terminal and the second DC output terminal.

Thereby, a full wave rectifier stage may be provided. In particular, the rectifier stage may further comprise another third thyristor which is connected in series with the third thyristor, in order to provide a three-phase rectifier stage. In particular, a three-phase full wave rectifier stage may be provided. Thereby, the rectifier stage may be used in an appropriate way using conventionally available three-phase input AC voltage.

According to an embodiment of the present invention, it is provided an AC-AC converter for converting an input AC-voltage to an output AC-voltage, the AC-AC converter comprising a rectifier stage according to an embodiment as described above; and a AC-converter stage connected between the first DC output terminal and the second DC output terminal of the rectifier stage and comprising a first AC output terminal and a second AC output terminal, the AC-converter stage being adapted to convert the output voltage, in particular the output DC voltage, generated by the rectifier stage to the output AC voltage between the first AC output terminal and the second AC output terminal.

In particular, in the AC-AC converter, the rectifier stage comprises the capacitor connected between the first DC output terminal and the second DC output terminal. The AC-converter stage may provide the output AC voltage to have a predetermined frequency which may be adjusted on demand. The AC-AC converter may in particular be part of a variable frequency drive (VFD) or variable speed drive (VSD). Such variable speed drive may comprise an electric motor or may be connected to an electric motor. The AC-AC converter can thus supply electric energy with a variable frequency to the electric motor, thereby driving the electric motor at variable speed. The variable speed drive may for example drive a pump or a compressor in a subsea oil or gas exploration process. The AC-AC converter may be supplied with electric energy from a topside equipment, wherein the topside equipment supplies energy via a long cable (such as 100 km - 500 km long) to the AC-AC converter. In particular, the AC-AC converter may represent a power cell which can be connected to other power cells in order to generate an output AC voltage having a predetermined adjustable frequency and predetermined adjustable amplitude. The variable frequency drive may thus comprise plural of such AC-AC converters in form of plural power cells.

According to an embodiment of the present invention, the AC-converter stage comprises a first controllable switch, in particular a first IGBT, connected to the first DC output terminal and to the second DC output terminal; and a second controllable switch, in particular a second IGBT, connected to the first DC output terminal and to the second DC output terminal, wherein the first controllable switch is connected to the first AC output terminal, wherein the second controllable switch is connected to the second AC output terminal.

Thereby, the first controllable switch and/or the second controllable switch may be semiconductor devices, such as transistors. In particular, the first controllable switch and/or the second controllable switch may be controlled at their respective gates by control signals generated by a further control circuit. In particular, the further control circuit may provide control signals having a desired frequency to generate the output AC voltage having a desired frequency.

In particular, the AC-converter stage may further comprise a further first controllable switch connected in series with the first controllable switch such that the series of the first controllable switch and the further first controllable switch is connected between the first DC output terminal and the second DC output terminal. Further in particular, the AC-converter stage may comprise a further second controllable switch connected in series with the second controllable switch, such that the series connection of the second controllable switch and the further second controllable switch is connected between the first DC output terminal and the second DC output terminal. Further, all controllable switches, i.e. the first controllable switch, the further first controllable switch, the second controllable switch and the further second controllable switch may have connected in parallel a respective diode.

In particular, the first AC output terminal may be connected between the first controllable switch and the further first controllable switch. In particular, the second AC output terminal may be connected between the second controllable switch and the further second controllable switch. Thereby, a compact AC-AC converter may be provided being able to provide the output AC voltage having a predetermined adjustable frequency and having a predetermined amplitude.

According to an embodiment of the present invention, the capacitor occupies a volume between 20 % and 70 %, in particular between 30 % and 60 %, further in particular between 30 % and 50 %, of a volume occupied by the entire AC-AC converter.

Thereby, the capacitor does not occupy an extensive volume, such that the AC-AC converter can be manufactured in a compact construction, also being cost-effective.

According to an embodiment of the present invention, a converter arrangement comprising a plurality of AC-AC converters according to an embodiment as described above is provided, wherein the AC-AC converters are connected in a series, wherein a second AC output terminal of one of the plurality of the AC-AC converters is connected to a first AC output terminal of a next (in the series) AC-AC converter of the plurality of the AC-AC converters in the series, respectively. Thereby, a series arrangement of power cells is provided which may in particular be used for a subsea equipment.

According to an embodiment of the present invention, it is provided a power supply arrangement comprising a first converter arrangement according to an embodiment as described above and a second converter arrangement according to an embodiment as described above (and in particular a third converter arrangement according to an embodiment as described above). Therein, a first AC output terminal of a first AC-AC converter in the series of the first converter arrangement is connected to a first AC output terminal of a first AC-AC converter in the series of the second converter arrangement and a second AC output terminal of the a last AC-AC converter in the series of the first converter arrangement and a second AC output terminal of a last AC-AC converter in the series of the second converter arrangement are connectable to a load, in particular a motor, a pump or a compressor. Thereby, a variable speed drive may be provided.

According to an embodiment, it is provided a subsea power grid, comprising a power cable, in particular having a length between 100 km and 300 km, leading from above a sea level to a depth between 1000 m and 4000 m, in particular between 3000 m and 4000 m, below the sea level for supplying electric energy utilizing AC voltage to a subsea equipment; and at least one rectifier stage according to an embodiment as described above, the AC voltage being applied between the first AC input terminal and the second AC input terminal of the rectifier stage, and/or at least one AC-AC converter according to an embodiment as described above and/or at least one converter arrangement according to an embodiment as described above and/or at least one power supply arrangement according to an embodiment as described above.

It should be understood that any features (individually or in any combination) disclosed, described, mentioned or provided for a rectifier stage or for a AC-AC converter or for a converter arrangement or for a power supply arrangement or for a subsea power grid may also be provided, arranged for, applied for (individually or in any combination) to a method for converting an input AC voltage to an output voltage according to an embodiment and vice versa.

According to an embodiment of the present invention, it is provided a method for converting an input AC voltage to an output voltage, the method comprising applying the input AC voltage between a first AC input terminal and a second AC input terminal; controlling a first conductance state of a first thyristor and controlling a second conductance state of a second thyristor such that the first thyristor and the second thyristor provide a rectified AC voltage between a first DC output terminal and a second DC output terminal as the output voltage, wherein the first thyristor is connected between the first DC output terminal and the second DC output terminal and is connected to the first AC input terminal, wherein the second thyristor is connected between the first DC output terminal and the second DC output terminal and is connected to the second AC input terminal, wherein an amplitude of the rectified AC voltage does not increase upon increasing the amplitude of the input AC-voltage, wherein in particular an amplitude of the rectified AC voltage may be constant upon varying an amplitude of the input AC voltage.

According to an embodiment of the present invention, the method for converting the input AC voltage to the output voltage is performed in a subsea operation, in particular during exploration of an oil and/or gas reservoir, in a depth between 1000 m and 4000 m, in particular between 3000 m and 4000 m, below a sea level. In particular, the electric energy may be supplied via a cable having a length between 100 km and 400 km from a topside main power supply.

According to an embodiment of the present invention, the method further comprises converting the output voltage generated between the first DC output terminal and the second DC output terminal to an output AC voltage; connecting a load to the output AC voltage, wherein the load requires varying power resulting in a variation of the input AC voltage in a range between 10 % and 30 %, in particular between 20 % and 30 %.

Although the amplitude of the input AC voltage may vary in a range between 10 % and 30 %, in particular between 20 % and 30 %, the amplitude of the voltage generated between the first DC output terminal and the second DC output terminal may vary to a smaller degree due to the use of the first and the second thyristors being controlled by the gate control circuit.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments. Similar elements (in structure and/or in function) may be denoted with similar reference signs which differ only in the first digit.
Fig. 1 schematically illustrates a subsea power grid according to an embodiment of the present invention;
Fig. 2 illustrates a graph showing a cable current in dependency of a cable length of a cable as illustrated in Fig. 1;
Fig. 3 illustrates a graph showing a subsea switchboard voltage in dependence of a load connected to the subsea power grid illustrated in Fig. 1;
Fig. 4 illustrates a circuit diagram of a AC-AC converter (or power cell) according to an embodiment of the present invention; and
Fig. 5 schematically illustrates a power supply arrangement comprising a plurality of AC-AC converters as illustrated in Fig. 4 according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit.

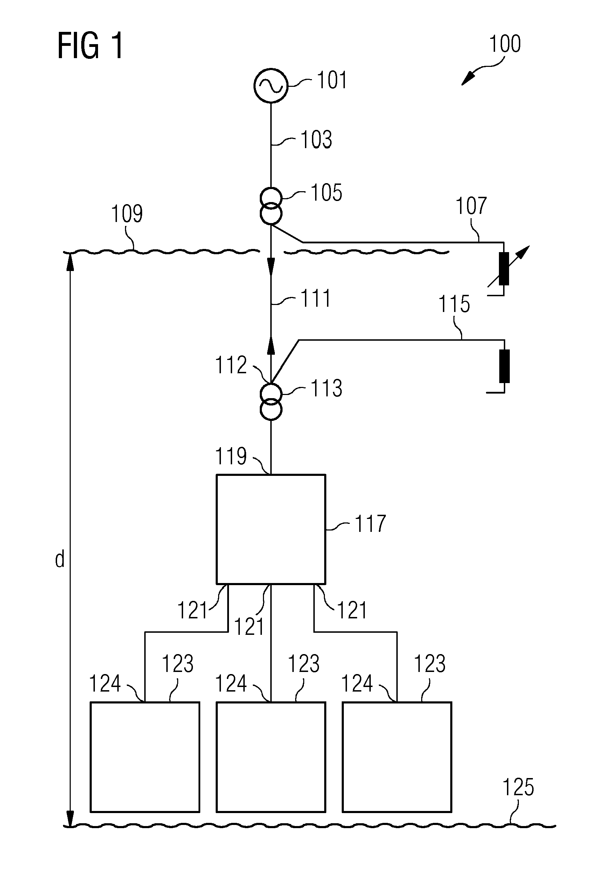

**Fig. 1** schematically illustrates a subsea power grid 100 according to an embodiment of the present invention. The power grid 100 comprises or is connected to a mains power supply 101 which may deliver a AC voltage having an amplitude of 132 kV and having a frequency of 60 Hz. Via a cable 103 the AC voltage is supplied to a topside transformer 105 which is dimensioned for 50 MVA, uk=22%, and which is adapted to transform the AC voltage from 132 kV to 90 kV. A topside SVC reactive compensation element 107 is connected to an output of the topside transformer 105 to enable reactive compensation. The mains supply 101, the topside transformer 105 and the topside reactive compensation 107 are located above a sea level 109.

A cable 111 having a length of 220 km (240 mm² copper wires) leads to a subsea location, where a subsea transformer 113 being dimensioned for 50 MVA 113 is located, which transforms the voltage of 90 kV to a voltage of 22 kV at an output of the subsea transformer 113, the transformer having an input 112. Further connected to the input 112 of the subsea transformer 113 is a subsea reactive compensation element 115 for enabling reactive compensation of the supplied AC voltage.

The output of the subsea transformer 113 is connected to a subsea main connection unit (SMCU) or a subsea switchgear unit (SSU) 117 which receives the electric power at an input terminal 119. The subsea main connection unit 117 comprises a number of output terminals 121 for distributing the electric power to a number of loads 123 having inputs 124 for supplying electric energy. Each load may comprise e.g. a variable speed drive and a motor. The loads 123 may be operated at 24 kV, 10.5 MVA, PF=0.97. The loads 123 may be located close to a sea ground 125 which may be located in a depth d between 3000 and 4000 m below the sea level 109.

In particular, the subsea power grid has a long step-out cable 111 with high capacitance. The cable 111 may be more or less dimensioned with a charging current low enough not to be overloaded during no load (only charging current) and full load (both charging current and active load current).

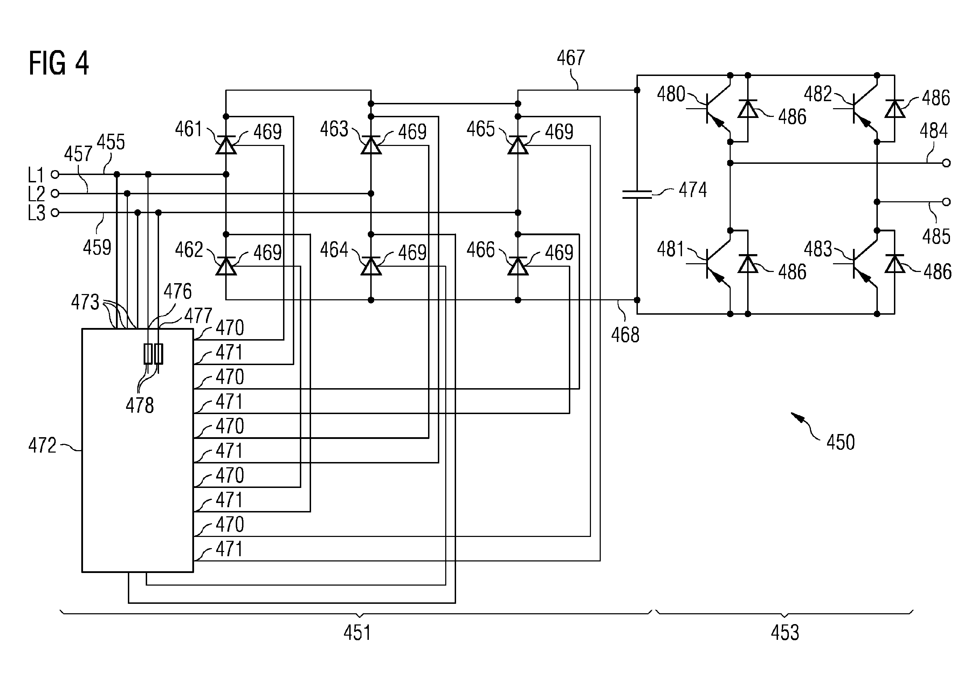

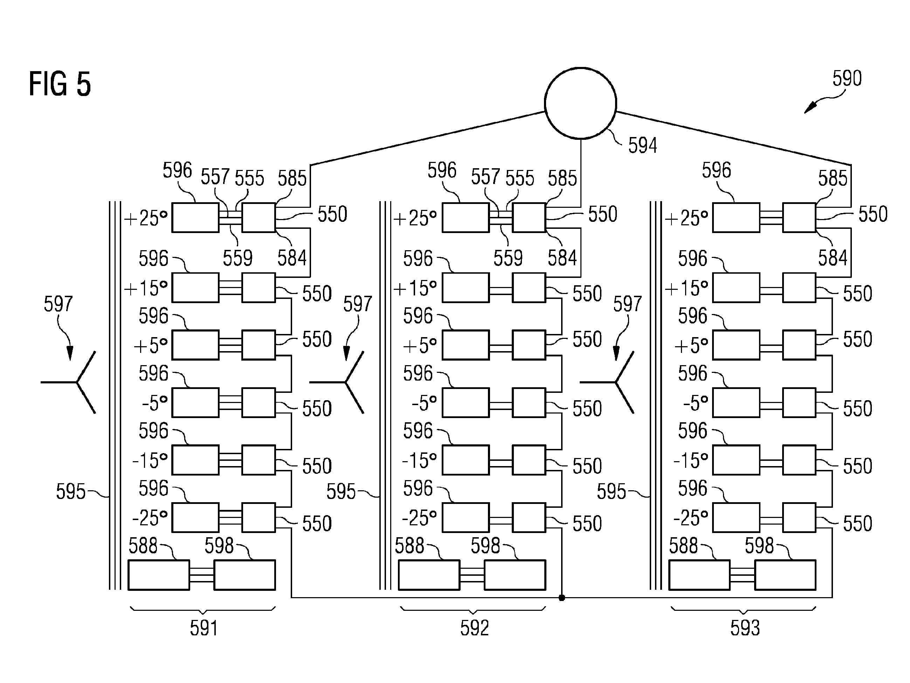

The variable speed drive comprised in the load 123 may be adapted or comprise a rectifier stage, an AC-AC converter, a converter arrangement, or a power supply arrangement according to an embodiment of the present invention. The loads 123 may for example comprise the AC-AC converter as illustrated in Fig. 4 or a drive topology as illustrated in Fig. 5.

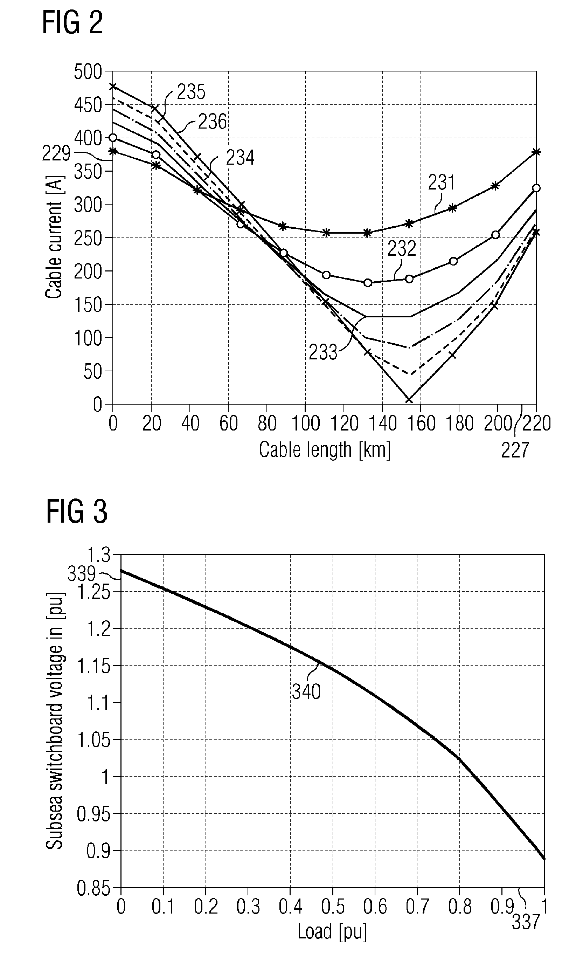

**Fig. 2** illustrates a graph having an abscissa 227 and having an ordinate 229, wherein on the abscissa 227 the cable length of the cable 111 is indicated in km and wherein on the ordinate 229 the electric current through the cable 111 illustrated in Fig. 1 is depicted in units Ampere (A). A curve 231 depicts the dependency of the cable current from the cable length in the case of 100 % of nominal load. The curve 232 depicts the case, wherein the loads 123 connected to the subsea main connection unit 117 illustrated in Fig. 1 correspond to 80 % of a nominal load. The curve 233 depicts the case, wherein the loads 123 correspond to 60 % of a nominal load. The curve 234 corresponds to 40 % of the nominal load, the curve 235 corresponds to 20 % of the nominal load and the curve 236 corresponds to no load. As can be seen from Fig. 2, the cable current through the cable 111 varies depending both on the cable length and the load. In particular, for a cable length of 220 km the cable current varies between about 380 A and 260 A, when the load decreases from 100 % of a nominal load to 0 % of the nominal load. The thermal cable limit of the cable 111 is 470 A.

**Fig. 3** illustrates a graph having an abscissa 337 showing a load in nominal units (pu) and having an ordinate 339 showing the subsea switchboard voltage in nominal units (pu), wherein the subsea switchboard voltage may be considered to be the input AC voltage at the input terminal 112 of the subsea transformer 113 or at the input terminal 119 of the subsea main connection unit 117. A curve 340 illustrates the dependency of the subsea switchboard voltage (also referred to as input AC voltage) from the load representing the power consumption of the load elements 123 as illustrated in Fig. 1. As is apparent from Fig. 3, the input AC voltage 340 varies between about 1.28 and 0.88 when expressed in fractions of a nominal input AC voltage. Thus, the input AC voltage 340 varies by about 30 % when the load varies in a range from 0 to 1, i.e. from 0 to the nominal load. The voltage variation as is apparent from Fig. 3 together with transient voltage variations are handled according to embodiments of the present invention.

**Fig. 4** illustrates a circuit diagram of an AC-AC converter 450 (also referred to as H bridge cell converter) according to an embodiment of the present invention, which may be part of a subsea variable speed drive. The AC-AC converter 450 comprises a rectifier stage 451 and an AC-converter stage 453. The rectifier stage 451 comprises a first AC input terminal 455, a second AC input terminal 457 and a third AC input terminal 459 for supplying a three-phase input AC voltage between pairs of terminals 455, 457, 459. The terminals 455, 457, 459 may correspond to the input terminals 119 of the subsea main connection unit 117 or to the inputs 124 of the loads 123, as is illustrated in Fig. 1. In particular, the input AC voltage may vary according to the curve 340 illustrated in Fig. 3.

The rectifier stage 451 further comprises a first thyristor 461, a further first thyristor 462, wherein the first terminal 455 is connected in between the first thyristor 461 and the further first thyristor 462. The rectifier stage 451 further comprises a second thyristor 463 and a further second thyristor 464 which is connected in series with the second thyristor 463, wherein the second AC input terminal 457 is connected between the second thyristor 463 and the further second thyristor 464. The rectifier stage 451 further comprises a third thyristor 465 and a further third thyristor 466 connected in series with the third thyristor 465, wherein the third AC input terminal 459 is connected between the third thyristor 465 and the further third thyristor 466.

The series connected first thyristor 461 and further first thyristor 462, the series connected second thyristor 463 and the further second thyristor 464, and the series connected third thyristor 465 and further third thyristor 466 are connected between a first DC output terminal 467 and a second DC output terminal 468. The gates 469 of the thyristors 461, 462, 463, 464, 465, 466 are connected to individual output terminals 470 of a gate control circuit 472 which is also comprised in the rectifier stage 451. Via the output terminals 470 the gate control circuit 472 is adapted to provide a current to the gates 469 of the thyristors and flowing through the cathode of the thyristors and flowing back to terminals 471 of the gate control circuit 472.

The gate control circuit 472 may also be referred to thyristor trigger pulse card.

The gate control circuit 472 comprises input terminals 473 via which the voltages detected or measured at the first AC input terminal 455, the second AC input terminal 457 and the third AC input terminal 459 can be supplied to the gate control circuit 472. The gate control circuit 472 may control conductances of the thyristors in order to keep the voltage between the first DC output terminal 467 and the second DC output terminal 468 at least approximately constant (in particular keep an amplitude of this voltage constant or below a nominal amplituded) such that a capacitor 474 also comprised in the rectifier stage 451 may only be dimensioned to have a nominal rated voltage for smoothening the voltage between the terminals 467 and 468.

In a conventional system the capacitor 474 would be required to handle large voltage variations leading to a large sized capacitor. In particular, by increasing the voltage for the capacitor bank 474 with 1.3 the volume will increase by the square of this value, i.e. 1.3² = 1.56. To void this, the thyristor based rectifier stage 451 may be used to actively reduce the overvoltages for the capacitor bank 474.

The thyristor based rectifier bridge (also called rectifier stage) 451 may be used as a replacement for the standard diode rectifier bridge used for a conventional multilevel cascade connected H bridge design. The thyristors comprised in the rectifier stage 451 are supplied with trigger pulses from the gate control circuit 472 via output terminal 470.

The cell thyristor control system or gate control circuit 472 may be placed on the cell and may be supplied with power from the cell. In particular, as is illustrated in the embodiment of the AC-AC converter 450 illustrated in Fig. 4, the gate control circuit 472 is supplied with electrical energy from two phases of the input AC voltage, namely the first AC input terminal 455 and the third AC input terminal 459 using the supply input terminals 476 and 477. Before the cell 450 is in operation, no energy is stored in the cell capacitor bank 474. Due to this the thyristor control power needs to be connected in front of the thyristor rectifier bridge. Further, the gate control circuit 472 needs to be internally secured for short circuits. In Fig. 4 fuses 478 are depicted on the input terminals 476 and 477 of the gate control circuit 472. The fuses 478 may be a thin wire of copper or silver or a narrow copper path on the printed circuit board layout in oil environment. The fuses 478 may also be replaced with a high ohmic resistance that assure a low and safe short circuit current in case of a short circuit on the control board 472.

By keeping the DC voltage to which the capacitor bank 474 is connected constant the capacitor size (the space or volume or weight) of the capacitor 474 can be reduced to be less than 50 % of the total cell volume of the AC-AC converter 450.

The AC-AC converter 450 illustrated in Fig. 4 further comprises the AC-converter stage 453. The AC-converter stage 453 comprises a first controllable switch 480 and a further first controllable switch 481 which is connected in series to the first controllable switch 480, wherein a first AC output terminal 484 is connected in between the first controllable switch 480 and the further first controllable switch 481. Further, the AC-converter stage 453 comprises a second controllable switch 482 and a further second controllable switch 483 which is connected in series to the second controllable switch 482, wherein a second AC output terminal 485 is connected between the second controllable switch 482 and the further second controllable switch 483. Gates of the controllable switches 480, 481, 482, 483 are controlled by input signals generated by not illustrated control circuits. In parallel to the controllable switches 480, 481, 482, 483 respective diodes 486 are connected.

In particular, the series connected first controllable switch 480 and further first controllable switch 481 are connected between the first DC output terminal 467 and the second DC output terminal 468. The controllable switches 480, 481, 482, 483 are controlled such that at the first AC output terminal 484 and the second AC output terminal 485 an output AC voltage having a predetermined frequency and amplitude is generated.

**Fig. 5** schematically illustrates a possible drive topology using the proposed cell as illustrated in Fig. 4, wherein the drive topology 590 illustrated in Fig. 5 is also referred to as power supply arrangement according to an embodiment of the present invention. The power supply arrangement can be configured as a variable speed drive. The power supply arrangement 590 comprises a first converter arrangement 591, a second converter arrangement 592 and a third converter arrangement 593 which provide each one phase to a load, e.g. an electric motor 594.

A primary winding 595 of an input transformer is inductively coupled to secondary windings 596 which provide their output power to the three AC input terminals 555, 557, 559 corresponding to the AC input terminals 455, 457 and 459 of the AC-AC converter 450 as illustrated in Fig. 4. The converter arrangements 591, 592 and 593 comprise a number of AC-AC converters 550 (which may be similar to the AC-AC converter 450 illustrated in Fig. 4), which are connected in a series, such that a second AC output terminal 585 of one AC-AC converters 550 is connected to a first AC output terminal 584 of another AC-AC converters 550. The primary coils 595 are exited by a primary voltage (22 kV, 50 Hz) which is provided via three-phases 597 to each of the converter arrangements 591, 592, 593. The first AC-AC converter 550 in each of the converter arrangements 591, 592, 593 are connected to each other with their second AC output terminals.

Elements 588 denote a precharge windings, elements 598 denote precharge circuits.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rectifier stage (451) for converting an input AC voltage to an output voltage, the rectifier stage comprising:
a first AC input terminal (455);
a second AC input terminal (457), wherein the input AC voltage is applicable between the first input terminal and the second input terminal;
a first DC output terminal (467);
a second DC output terminal (468);
a first thyristor (461) connected between the first DC output terminal (467) and the first AC input terminal (455);
a second thyristor (463) connected between the first DC output terminal (467) and the second AC input terminal (457);
a gate control circuit (472) adapted and connected to control a first conductance state of the first thyristor (461) and to control a second conductance state of the second thyristor (463) such that the first thyristor and the second thyristor provide a rectified AC voltage between the first DC output terminal (467) and the second DC output terminal (468) as the output voltage,
wherein an amplitude of the rectified AC voltage does substantially not increase upon increasing the amplitude of the input AC-voltage.

2. Rectifier stage according to claim 1, wherein the gate control circuit (472) is adapted to control the first conductance state and the second conductance state in order to adjust the amplitude of the rectified AC voltage to deviate less than 10 %, in particular less than 5 %, further in particular less than 2 %, from a target amplitude of the rectified AC voltage, when the amplitude of the input AC voltage deviates from a nominal amplitude of the input AC voltage in a range between 10 % and 30 %, in particular between 20 % and 30 %.

3. Rectifier stage according to claim 1 or 2, further comprising:
a capacitor (474) connected between the first DC output terminal (467) and the second DC output terminal (468) for smoothing the rectified AC voltage to generate an output DC voltage as the output voltage.

4. Rectifier stage according to claim 3, wherein the gate control circuit (472) is adapted to control the first conductance state and the second conductance state in order to adjust the output DC voltage to deviate less than 10 %, in particular less than 5 %, further in particular less than 2 %, from a target output DC voltage, when the amplitude of the input AC voltage deviates from a nominal amplitude of the input AC voltage in a range between 10 % and 40 %, in particular between 20 % and 40 %.

5. Rectifier stage according to claim 3 or 4, wherein the capacitor has a rated voltage not greater than required to smoothen the rectified AC voltage deviating less than 10 %, in particular less than 5 %, further in particular less than 2 %, from the target amplitude of the rectified AC voltage

6. Rectifier stage according to one of the preceding claims, further comprising:
another first thyristor (462) connected between the first DC output terminal and the second DC output terminal in series with the first thyristor (461) and connected to the first AC input terminal (455), the first AC input terminal being connected between the first thyristor and the other first thyristor; and
another second thyristor (464) connected between the first DC output terminal and the second DC output terminal in series with the second thyristor (463) and connected to the second AC input terminal (457), the second AC input terminal being connected between the second thyristor and the other second thyristor,
wherein the gate control circuit is further adapted and connected to control another first conductance state of the other first thyristor and to control another second conductance state of the other second thyristor such that the first thyristor, the second thyristor, the other first thyristor and the other the second thyristor together provide the rectified AC voltage between the first DC output terminal and the second DC output terminal.

7. AC-AC converter (450, 550) for converting an input AC-voltage to an output AC-voltage, the AC-AC converter comprising:
a rectifier stage (451) according to one of the preceding claims; and
a AC-converter stage (453) connected between the first DC output terminal and the second DC output terminal of the rectifier stage and comprising a first AC output terminal (484) and a second AC output terminal (485), the AC-converter stage being adapted to convert the output voltage, in particular the output DC voltage, generated by the rectifier stage to the output AC voltage between the first AC output terminal and the second AC output terminal.

8. AC-AC converter (450) according to claim 7, wherein the AC-converter stage comprises:
a first controllable switch (480), in particular a first IGBT, connected to the first DC output terminal and to the second DC output terminal; and
a second controllable switch (482), in particular a second IGBT, connected to the first DC output terminal and to the second DC output terminal,
wherein the first controllable switch (480) is connected to the first AC output terminal (484),
wherein the second controllable switch (482) is connected to the second AC output terminal (485).

9. AC-AC converter according to claim 7 or 8, wherein the capacitor occupies a volume between 20 % and 70 %, in particular between 30 % and 60 %, further in particular between 30 % and 50 %, of a volume occupied by the entire AC-AC converter.

10. Converter arrangement (591,592,593) comprising a plurality of AC-AC converters (550) according to one of claims 7 to 9, the AC-AC converters (550) being connected in a series, wherein a second AC output terminal (585) of one of the plurality of the AC-AC converters is connected to a first AC output terminal (584) of a next AC-AC converter of the plurality of the AC-AC converters in the series, respectively.

11. Power supply arrangement (590) comprising a first converter arrangement (591) according to claim 10 and a second converter arrangement (592) according to claim 10,
wherein a first AC output terminal (584) of a first AC-AC converter in the series of the first converter arrangement is connected to a first AC output terminal (584) of a first AC-AC converter in the series of the second converter arrangement,
wherein a second AC output terminal (585) of a last AC-AC converter in the series of the first converter arrangement and a second AC output terminal (585) of a last AC-AC converter in the series of the second converter arrangement are connectable to a load (123, 594), in particular a motor.

12. Subsea power grid (100), comprising:
a power cable (111), in particular having a length between 100 km and 300 km, leading from above a sea level to a depth between 1000 m and 4000 m, in particular between 3000 m and 4000 m, below the sea level for supplying electric energy utilizing AC voltage to a subsea equipment; and
at least one rectifier stage (451) according to one of claims 1 to 6, the AC voltage being applied between the first AC input terminal and the second AC input terminal of the rectifier stage, and/or
at least one AC-AC converter (450, 550) according to one of claims 7 to 9 and/or
at least one converter arrangement (591, 592, 593) according to claim 10 and/or
at least one power supply arrangement (590) according to claim 11.

13. Method for converting an input AC voltage to an output voltage, the method comprising:
applying the input AC voltage between a first AC input terminal and a second AC input terminal;
controlling a first conductance state of a first thyristor and controlling a second conductance state of a second thyristor such that the first thyristor and the second thyristor provide a rectified AC voltage between a first DC output terminal and a second DC output terminal as the output voltage,
wherein the first thyristor is connected between the first DC output terminal and the first AC input terminal,
wherein the second thyristor is connected between the first DC output terminal and the second AC input terminal,
wherein an amplitude of the rectified AC voltage does substantially not increase upon increasing the amplitude of the input AC-voltage.

14. Method according to claim 13, which is performed in a subsea operation, in particular during exploration of an oil and/or gas reservoir, in a depth between 1000 m and 4000 m, in particular between 3000 m and 4000 m, below a sea level.

15. Method according to claim 13 or 14, further comprising:
converting the output voltage generated between the first DC output terminal and the second DC output terminal to an output AC voltage;
connecting a load to the output AC voltage, wherein the load requires varying power resulting in a variation of the input AC voltage in a range between 10 % and 30 %, in particular between 20 % and 30 %.
